# EUROPEAN PATENT SPECIFICATION

(11) **EP 2 462 200 B1**
(45) Date of publication and mention of the grant of the patent: **11.11.2015**
(21) Application number: 10814080.7
(22) Date of filing: 01.09.2010
(51) Int. Cl.: C09D 5/00, C09D 7/00, B05D 1/32

(54) **THE USE OF PROTECTIVE BIODEGRADABLE COATINGS FOR PREVENTING THE DEPOSIT OF OVERSPRAY**
DIE VERWENDUNG VON BIOLOGISCH ABBAUBARE SCHUTZBESCHICHTUNGEN ZUR VERHINDERUNG DER ABLAGERUNG VON OVERSPRAY
L'UTILISATION DE REVÊTEMENTS DE PROTECTION BIODÉGRADABLES POUR EMPÊCHER LE DÉPÔT DE SURPULVÉRISATION

(30) Priority: 03.09.2009 US 275827 P
(43) Date of publication of application: 13.06.2012
(73) Proprietor: Rhodia Operations, 93306 Aubervilliers (FR)
(72) Inventor: TRIVEDI, Satyen, East Windsor NJ 08520 (US); FLUCK, David, Elkton MD 21921 (US); SEHGAL, Amit, Marlton NJ 08053 (US)
(74) Representative: Gillard, Richard Edward
(86) International application number: PCT/US2010/002391
(87) International publication number: WO 2011/028274

(56) References cited:
- EP-A1- 2 042 566
- WO-A1-2010/129018
- WO-A2-01/96481
- WO-A2-2008/072193
- US-A1- 2006 089 281
- US-A1- 2006 229 220
- US-A1- 2006 252 663
- US-A1- 2008 139 437
- US-A1- 2009 194 003
- US-A1- 2009 198 002

## Description

### CROSS REFERENCE TO RELATED APPLICATIONS

This application claims the benefit of U.S. Provisional Application Serial No. 61/275,827, filed September 3, 2009, herein incorporated by reference.

### FIELD OF THE INVENTION

The present invention relates to a washable protective coating utilized to prevent undesired coatings (such as overspray) from contacting surfaces, in particular, interior surfaces of spray booths in the automotive industry.

### BACKGROUND OF THE INVENTION

The manufacture of many goods in the aerospace, automotive, appliance and other related industries require the application of a coating or decorative finish, either for appearance or protection. Various types of surfaces are coated with a variety of coatings, such as base coats, top coats, paints and aqueous metallic slurries. Such coatings are generally applied inside an enclosed area or spray booth. Spray booth typically comprise sealed chambers with a clean air supply and removal system.

When an object having a surface to be coated is placed inside the booth, paint can be applied via hand or automatic spray equipment. However, due to inefficiencies typically present in the spraying process, the sprayed paint deposits on both the object as well as the interior surfaces of the booth. This undesired coating on surfaces such as the booth's interior walls, windows, floors, etc. is generally known as "overspray." Overspray accumulates on spray equipment, windows, mechanical stands and on the floor. Depending on the chemistry of the paint either drying or curing of the overspray, overspray can be difficult to remove. In many cases, overspray produces a sticky residue in the spray booth. Build up of the sticky overspray residue will start affecting quality of the painted product. It may also put workers in danger and compromise safety due to sticky and/or slippery equipment and surroundings. At some point, the spray booth may not be operated safely. Thus, it is necessary to clean the spray booth on a regular basis as necessary and in between operations. This further increases down-time and compromises productivity.

### SUMMARY OF THE INVENTION

The present invention relates to the protection of surfaces during coating operations, typically, surfaces in and around a paint spray booth, upon which a coating is not desired. Typcially, the present invention includes the use of compositions, methods and applications of protecting the interior walls, windows, and floor surfaces in and around a paint spray booth. Spraying or application of coatings are typically performed on automotive parts, aerospace parts, appliance parts and/or parts in industries which require coatings or decorative finishes in an enclosed area such as a spray booth.

Current mechanisms for overspray cleanup include best practices to prevent or minimize accumulation of paint to mechanical or chemical means for removing it there after. Normally, a strippable coating is applied on the booth so that paint is accumulated on this sacrificial layer. For example, WO 01/96481 discloses compositions and methods relating to such protective coatings. After certain operations, paint is scraped mechanically, chemically or manually. Methods such as knives, chisels, razor blades, scrappers, rags etc as well as water blasting (high pressure) are implemented to clean paint from the spray booth. In other cases solvents such as xylene, toluene, MEK, butyl acetate etc. are used to clean the booth. In some cases cleaners are applied on the booth which chemically react with coatings weakening adhesion with the spray booth wall followed by pressure washing to remove coating. For example, WO 2010/129018 discloses cleaning compositions utilized for consumer and industrial applications, and US 2008/0139437 discloses a composition for removing paint from a substrate.

The present invention is the novel use of a water soluble sacrificial coating containing a low-VOC biodegradable solvent that may be sprayed or applied onto the walls of the spray booth prior to painting operations allowing it to be quickly and efficiently removed when needed. Low VOC in one embodiment means less than 150 g/L, while in another embodiment, low VOC means less than 100 g/L, while in other embodiments, low VOC means less than 50 g/L. The low-VOC solvent acts to keep prevent drying/hardening of the paint during a normal workday. This greatly streamlines the painting operations while maintaining a eco-friendly profile.

The use of the present invention will become apparent from the following detailed description and examples, which in one aspect is a composition utilized to prevent the deposit of overspray, the composition comprising, based on the total weight of the composition, (a) from 1% to 60% by weight a blend of dibasic esters; (b) from 10% to 75% by weight one or more surfactants; and (c) a thickener.

In one embodiment, the blend of dibasic esters comprises (i) a dialkyl methylglutarate and (ii) at least one of a dialkyl adipate or a dialkyl ethylsuccinate.

In one embodiment, the blend of dibasic esters has a general formula:

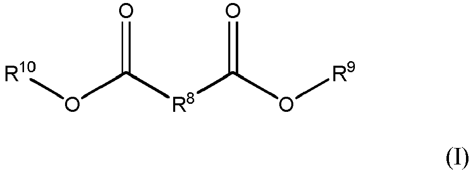

wherein R⁹ and R¹⁰ independently comprise a hydrocarbon chain containing 1 to 10 carbon atoms, and wherein R⁸ is a mixture of at least two of -CH₂-CH₂-CH₂₋-CH₂-, -CH(CH₃)-CH₂-CH₂-, and -CH(C₂H₅)-CH₂-.

In one embodiment, the one or more surfactants are selected from the group consisting of an alcohol alkoxylate, an alcohol ethoxylate, an alkyl phenol alkoxylate, an alkyl phenol ethoxylate, a terpene alkoxylate, a terpene and any combination thereof.

In another embodiment, the one ore more surfactants comprise (a) an alcohol ethoxylate and (b) a terpene.

In another embodiment, the blend of dibasic esters comprises:
(i) 7-14%, by weight of the blend, a dibasic ester of formula: 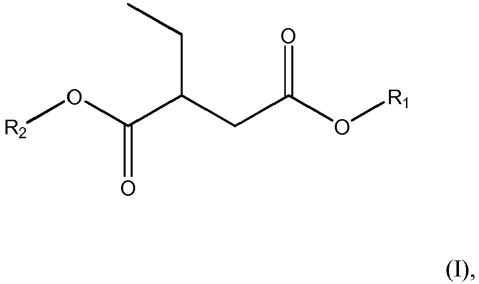
(ii) 80-94%, by weight of the blend, a dibasic ester of formula 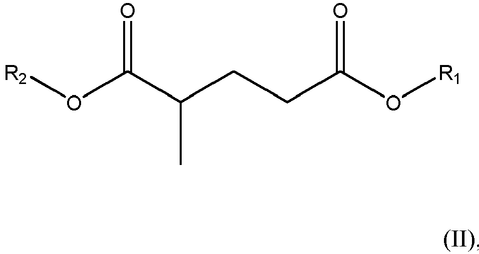 and
(iii) 0.5-5%, or 0-10%, by weight of the blend, a dibasic ester of formula 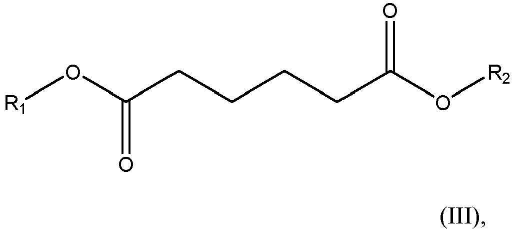
wherein R₁ and R₂ individually comprise a C₁-C₁₀ hydrocarbon group.

In another aspect, the present invention is a method for protecting a surface in a coating application comprising the steps of: a) contacting a composition to a surface that is desired not be in contact with a coating, the composition comprising, based on the total weight of the composition: (i) from 1% to 60% by weight a blend of dibasic esters, (ii) from 10% to 75% by weight one or more surfactants; and (iii) a thickener; and b) removing the coating composition from the surface after the coating application.

In another aspect, the method further comprises rinsing the composition from the surface with water.

In another aspect, the method comprises a coating application which is a spray booth application.

In a further aspect, the present invention is a method for protecting a surface during a spray booth operation comprising the steps of a) contacting a composition with a surface that is desired not be contaminated during the spray booth operation, the composition comprising, based on the total weight of the composition, (i) from 1% to 60% by weight a blend of dibasic esters, the blend of dibasic esters having general formula: 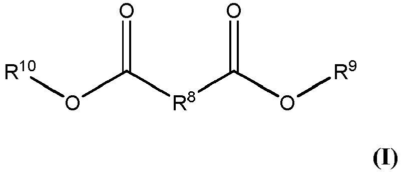 wherein R⁹ and R¹⁰ independently comprise a hydrocarbon chain containing 1 to 10 carbon atoms, and wherein R⁸ is a mixture of at least two of -CH₂-CH₂-CH₂₋-CH₂-, -CH(CH₃)-CH₂-CH₂-, and -CH(C₂H₅)-CH₂; (ii) from 2% to 60% by weight an alcohol ethoxylate; (iii) from 1% to 50% by weight a terpene; and (iv) a thickener; b) allowing the composition to be exposed to paint during the spray booth operation; and c) rinsing the composition from the surface with an aqueous solution after the spray booth operation.

In a further aspect, the present invention is a method for protecting a surface during a spray booth operation comprising the steps of:
a) contacting a composition with a surface that is desired not be contaminated during the spray booth operation, the composition comprising, based on the total weight of the composition:
   (i) from 1% to 60% by weight a blend of dibasic esters, wherein the blend of dibasic esters comprises:
      (A) 7-14%, by weight of the blend, a dibasic ester of formula: 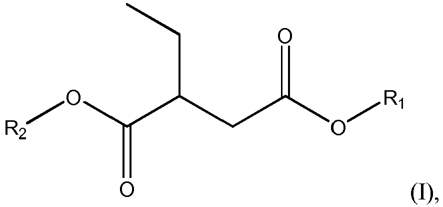
      (B) 80-94%, by weight of the blend, a dibasic ester of formula 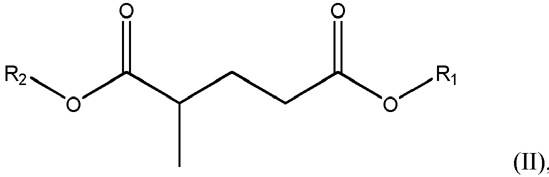 and
      (C) 0-10%,by weight of the blend, a dibasic ester of formula 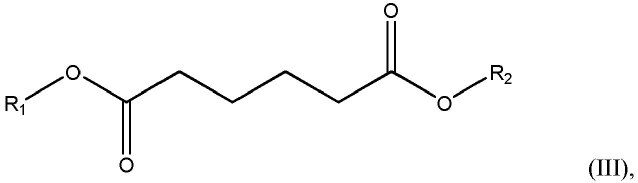 wherein R₁ and R₂ individually comprise a C₁-C₁₀ hydrocarbon group;
   (ii) from 2% to 60% by weight an alcohol ethoxylate;
   (iii) from 1% to 50% by weight a terpene; and
   (iv) a thickener;
b) allowing the composition to be exposed to paint during the spray booth operation; and
c) rinsing the composition from the surface with an aqueous solution after the spray booth operation.

In one embodiment, the blend of dibasic esters is derived from one or more by-products in the production of polyamide.

### DETAILED DESCRIPTION

As used herein, the term "alkyl" means a saturated straight chain, branched chain, or cyclic hydrocarbon radical, including but not limited to, methyl, ethyl, n-propyl, iso-propyl, n-butyl, sec-butyl, t-butyl, pentyl, n-hexyl, and cyclohexyl.

As used herein, the terminology "(Cᵣ-Cₛ)" in reference to an organic group, wherein r and s are each integers, indicates that the group may contain from r carbon atoms to s carbon atoms per group.

Cleaning a spray booth is very labor extensive and complicated process. High pressure water blasting and use of sharp tools expose workers to physical harm. Exposure to hazardous chemicals also put workers in danger.

The present invention is the use of a composition relating to and an application of depositing a sacrificial coating layer based on biodegradable low-VOC solvent, as a primary ingredient. This coating layer can be sprayed, applied brush or roller on to a vertical or horizontal surface where overspray is not desired. In one embodiment, the sacrificial coating of the use of the present invention remains wet or substantially wet as overspray accumulates on this layer. The presence of this low-VOC solvent allows the coating not to dry/harden at room temperature during a normal operation. At the end of the coatings application, typically a spray booth operation, simply rinsing with water may be used to wash the surrounding coatings and overspray off the booth surfaces. The use of the present invention prevents overspray or unwanted coatings from contaminating the booth and once removed maintain a clean work surface.

In one embodiment, the composition of the use of the present invention are formulations developed using a non-toxic, non-flammable and biodegradable dibasic ester solvent as described herein (Rhodiasolv Iris, manufactured by Rhodia Inc.), an alcohol ethoxylate (Rhodasurf DA-630, manufactured by Rhodia Inc.), Terpene EO/PO surfactant (Rhodasurf MSC, manufactured by Rhodia Inc.) and a thickener comprising hydroxylpropyl methyl cellulose (Methocel 311, manufactured by Rhodia Inc.). The composition of the use of the present invention has environmentally friendly characteristics such as being non toxic, bio-degradable, and non-flammable.

The composition of the use of the present invention provides ease of removal of the coating after use as well as a eco-friendly profile. The composition of the use of the present invention does not require the use VOC's as solvents, which are not environmentally friendly. In one embodiment, the use of the invention consists essentially of the blend of dibasic esters described herein, a thickener and a surfactant, typically an alcohol ethoxylate. Accordingly, when such compounds are not present, shipping and storage requirements may be less stringent; the user is not required to wear a respirator typically applicable to high VOC compounds; there is no objectionable solvent odor, and objectionable solvents and VOC's are not released into the air.

In one embodiment, the formulation will be able to provide 5-10 × 10⁻³ L (5-10 mils) of wet coating on horizontal or vertical surfaces. This formulation can be diluted with water for other cleaning applications such as stain cleaning, graffiti removing, adhesive cleaning etc.

The composition of the present invention can be utilized to prevent the deposit of overspray. In one embodiment, the composition comprises, based on the total weight of the composition, (a) from 1% to 60% by weight a blend of dibasic esters; (b) from 10% to 75% by weight one or more surfactants; and (c) a thickener. In one embodiment, the composition of the use of the present invention comprises, based on the total weight of the composition, (a) from 10% to 50% by weight a blend of dibasic esters; (b) from 25% to 75% by weight one or more surfactants; and (c) from 0.01% to 5% by weight a thickener.

### Blend of Dibasic Esters

The composition of the use of the present invention comprises a blend of dibasic esters. In one embodiment, the blend comprises adducts of alcohol and linear diacids, the adducts having the formula R₁-OOC-A-COO-R₂ wherein R₁ and/or R₂ comprise, individually, a C₁-C₁₂ alkyl, more typically a C₁-C₈ alkyl, and A comprises a mixture of -(CH₂)₄-, -(CH₂)₃, and - (-CH₂)₂-. In another embodiment, R₁ and/or R₂ comprise, individually, a C₄-C₁₂ alkyl, more typically a C₄-C₈ alkyl. In one embodiment, R₁ and R₂ can individually comprise a hydrocarbon group originating from fusel oil. In one embodiment, R₁ and R₂ individually can comprise a hydrocarbon group having 1 to 8 carbon atoms. In one embodiment, R₁ and R₂ individually can comprise a hydrocarbon group having 5 to 8 carbon atoms.

In one embodiment, the blend comprises adducts of alcohol and branched or linear diacids, the adducts having the formula R1-OOC-A-COO-R2 wherein R1 and/or R2 comprise, individually, a C1-C12 alkyl, more typically a C1-C8 alkyl, and A comprises a mixture of-(CH2)4-, -CH2CH2CH(CH3)-, and -CH2CH(C2H5)-. In another embodiment, R1 and/or R2 comprise, individually, a C4-C12 alkyl, more typically a C4-C8 alkyl. It is understood that the acid portion may be derived from such dibasic acids such as adipic, succinic, glutaric, oxalic, malonic, pimelic, suberic and azelaic acids, as well as mixtures thereof.

One or more dibasic esters used in the composition of the use of the present invention can be prepared by any appropriate process. For example, a process for preparing the adduct of adipic acid and of fusel oil is, for example, described in the document "The Use of Egyptian Fusel Oil for the Preparation of Some Plasticizers Compatible with Polyvinyl Chloride", Chuiba et al., Indian Journal of Technology, Vol. 23, August 1985, pp. 309-311.

The dibasic esters can be obtained by a process comprising an "esterification" stage by reaction of a diacid of formula HOOC-A-COOH or of a diester of formula MeOOC-A-COOMe with a branched alcohol or a mixture of alcohols. The reactions can be appropriately catalyzed. Use is preferably made of at least 2 molar equivalents of alcohols per diacid or diester. The reactions can, if appropriate, be promoted by extraction of the reaction by-products and followed by stages of filtration and/or of purification, for example by distillation.

The diacids in the form of mixtures can in particular be obtained from a mixture of dinitrile compounds in particular produced and recovered in the process for the manufacture of adiponitrile by double hydrocyanation of butadiene. This process, used on a large scale industrially to produce the greater majority of the adiponitrile consumed worldwide, is described in numerous patents and works. The reaction for the hydrocyanation of butadiene results predominantly in the formulation of linear dinitriles but also in formation of branched dinitriles, the two main ones of which are methylglutaronitrile and ethylsuccinonitrile. The branched dinitrile compounds are separated by distillation and recovered, for example, as top fraction in a distillation column, in the stages for separation and purification of the adiponitrile. The branched dinitriles can subsequently be converted to diacids or diesters (either to light diesters, for a subsequent transesterification reaction with the alcohol or the mixture of alcohols or the fusel oil, or directly to diesters in accordance with the invention).

Dibasic esters of the composition of the use of the present invention may be derived from one or more by-products in the production of polyamide, for example, polyamide 6,6. In one embodiment, the blend comprises linear or branched, cyclic or noncyclic, C₁-C₂₀ alkyl, aryl, alkylaryl or arylalkyl esters of adipic diacids, glutaric diacids, and succinic diacids. In another embodiment, the blend comprises linear or branched, cyclic or noncyclic, C₁-C₂₀ alkyl, aryl, alkylaryl or arylalkyl esters of adipic diacids, methylglutaric diacids, and ethylsuccinic diacids

Generally, polyamide is a copolymer prepared by a condensation reaction formed by reacting a diamine and a dicarboxylic acid. Specifically, polyamide 6,6 is a copolymer prepared by a condensation reaction formed by reacting a diamine, typically hexamethylenediamine, with a dicarboxylic acid, typically adipic acid.

In one embodiment, the blend of the composition of the use of the present invention can be derived from one or more by-products in the reaction, synthesis and/or production of adipic acid utilized in the production of polyamide, the composition comprising a blend of dialkyl esters of adipic diacids, glutaric diacids, and succinic diacids (herein referred to sometimes as "AGS" or the "AGS blend").

In one embodiment, the blend of esters is derived from by-products in the reaction, synthesis and/or production of hexamethylenediamine utilized in the production of polyamide, typically polyamide 6,6. The composition comprises a blend of dialkyl esters of adipic diacids, methylglutaric diacids, and ethylsuccinic diacids (herein referred to sometimes as "MGA", "MGN", "MGN blend" or "MGA blend").

The boiling point of the dibasic ester blend of the present invention is between the range of about 120°C to 450°C. In one embodiment, the boiling point of the blend of the present invention is in the range of about 160°C to 400°C; in one embodiment, the range is about 210°C to 290°C; in another embodiment, the range is about 210°C to 245°C; in another embodiment, the range is the range is about 215°C to 225°C. In one embodiment, the boiling point range of the blend of the present invention is between about 210°C to 390°C, more typically in the range of about 280°C to 390°C, more typically in the range of 295°C to 390°C. In one embodiment, boiling point of the blend of the present invention is in the range of about 215°C to 400°C, typically in the range of about 220°C to 350°C.

In one embodiment, the blend of dibasic esters has a boiling point range of between about 300°C and 330°C. Typically, the diisoamyl AGS blend is associated with this boiling point range. In another embodiment, the dibasic ester blend of the composition of the use of the present invention has a boiling point range of between about 295°C and 310°C. Typically, the di-n-butyl AGS blend is associated with this boiling point range. Generally, a higher boiling point, typically, above 215°C, or high boiling point range corresponds to lower VOC.

In certain embodiments, the dibasic ester blend comprises:
a diester of formula I: 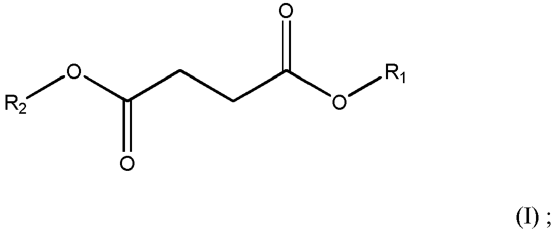
a diester of formula II: 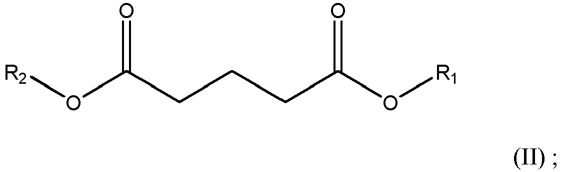 and/or
a diester of formula III: 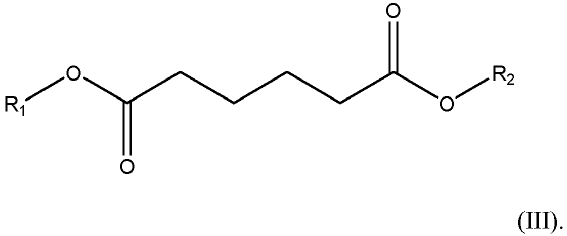
R₁ and/or R₂ can individually comprise a hydrocarbon having from 1 to 8 carbon atoms, typically, methyl, ethyl, propyl, isopropyl, butyl, isobutyl, n-butyl, isoamyl, hexyl, heptyl or octyl. In such embodiments, the blend typically comprises (by weight of the blend) (i) 15% to 35% of the diester of formula I, (ii) 55% to 70% of the diester of formula II, and (iii) 7% to 20% of the diester of formula III, and more typically, (i) 20% to 28% of the diester of formula I, (ii) 59% to 67% of the diester of formula II, and (iii) 9% to 17% of the diester of formula III. The blend is generally characterized by a flash point of 98 °C, a vapor pressure at 20 °C of less than about 10 Pa, and a distillation temperature range of about 200-300 °C. Mention may also be made of Rhodiasolv® RPDE (Rhodia Inc., Cranbury, NJ), Rhodiasolv® DIB (Rhodia Inc., Cranbury, NJ) and Rhodiasolv® DEE (Rhodia Inc., Cranbury, NJ).

In certain alternative embodiments, the dibasic ester blend comprises:
a diester of the formula IV: 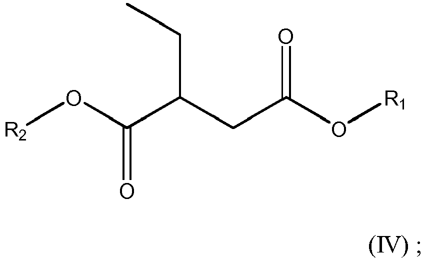
a diester of the formula V: 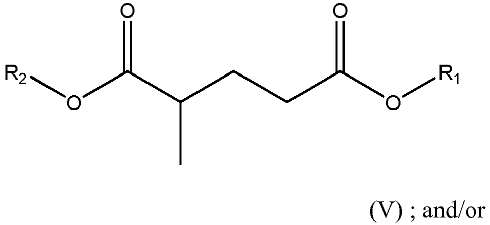
a diester of the formula VI: 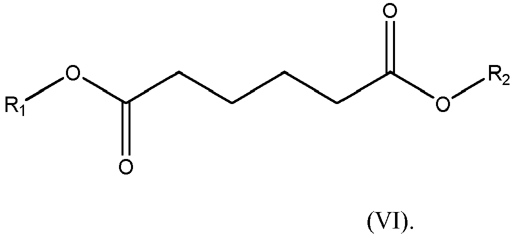
R₁ and/or R₂ can individually comprise a hydrocarbon having from 1 to 8 carbon atoms, typically, methyl, ethyl, propyl, isopropyl, butyl, isobutyl, n-butyl, isoamyl, hexyl, heptyl, or octyl. In such embodiments, the blend typically comprises (by weight of the blend) (i) from 5% to 30% of the diester of formula IV, (ii) from 70% to 95% of the diester of formula V, and (iii) from 0% to 10% of the diester of formula VI. In one emboidment, the blend typically comprises (by weight of the blend): (i) from 6% to 12% of the diester of formula IV, (ii) from 86% to 92% of the diester of formula V, and (iii) from 0.5% to 4% of the diester of formula VI.

In another embodiment, the blend comprises (by weight of the blend): (i) 9% of the diester of formula IV, (ii) 89% of the diester of formula V, and (iii) 1% of the diester of formula VI. The blend is generally characterized by a flash point of of 98 °C, a vapor pressure at 20 °C of less than about 10 Pa, and a distillation temperature range of about 200-275 °C. Mention may be made of Rhodiasolv® IRIS and Rhodiasolv® DEE/M, manufactured by Rhodia Inc. (manufactured by Rhodia Inc., Cranbury, NJ).

According to one embodiment of the use of the present invention, the blend of dibasic esters corresponds to one or more by-products of the preparation of adipic acid, which is one of the main monomers in polyamides. For example, the dialkyl esters are obtained by esterification of one by-product, which generally contains, on a weight basis, from 15 to 33% succinic acid, from 50 to 75% glutaric acid and from 5 to 30% adipic acid. As another example, the dialkyl esters are obtained by esterification of a second by-product, which generally contains, on a weight basis, from 30 to 95% methyl glutaric acid, from 5 to 20% ethyl succinic acid and from 1 to 10% adipic acid. It is understood that the acid portion may be derived from such dibasic acids such as, adipic, succinic, glutaric, oxalic, malonic, pimelic, suberic and azelaic acids, as well as mixtures thereof.

### Surfactants

The composition of the use of the present invention may also contain one or more surfactants. The surfactant or surfactants of the use of the present invention can be any number of cationic, amphoteric, zwitterionic, anionic or nonionic surfactants, derivatives thereof, as well as blends of such surfactants.

In one embodiment, the nonionic surfactants generally includes one or more of for example amides such as alkanolamides, ethoxylated alkanolamides, ethylene bisamides; esters such as fatty acid esters, glycerol esters, ethoxylated fatty acid esters, sorbitan esters, ethoxylated sorbitan; ethoxylates such as alkylphenol ethoxylates, alcohol ethoxylates, tristyrylphenol ethoxylates, mercaptan ethoxylates; end-capped and EO/PO block copolymers such as ethylene oxide/propylene oxide block copolymers, chlorine capped ethoxylates, tetra-functional block copolymers; amine oxides such lauramine oxide, cocamine oxide, stearamine oxide, stearamidopropylamine oxide, palmitamidopropylamine oxide, decylamine oxide; fatty alcohols such as decyl alcohol, lauryl alcohol, tridecyl alcohol, myristyl alcohol, cetyl alcohol, stearyl alcohol, oleyl alcohol, linoleyl alcohol and linolenyl alcohol; and alkoxylated alcohols such as ethoxylated lauryl alcohol, trideceth alcohols; and fatty acids such as lauric acid, oleic acid, stearic acid, myristic acid, cetearic acid, isostearic acid, linoleic acid, linolenic acid, ricinoleic acid, elaidic acid, arichidonic acid, myristoleic acid and mixtures thereof.

In another embodiment, the non-ionic surfactant is a glycol such as polyethylene glycol (PEG), alkyl PEG esters, polypropylene glycol (PPG) and derivatives thereof. In one embodiment, the surfactant is an alcohol ethoxylate, an alkyl phenol ethoxylate or a terpene alkoxylate. In one exemplary embodiment, the surfactant is a C₆-C₁₃ alcohol ethoxylate and, more typically, a C₈-C₁₂ alcohol ethoxylate.

In another embodiment, the surfactant is a cationic surfactant. The cationic surfactant includes but is not limited to quaternary ammonium compounds, such as cetyl trimethyl ammonium bromide (also known as CETAB or cetrimonium bromide), cetyl trimethyl ammonium chloride (also known as cetrimonium chloride), myristyl trimethyl ammonium bromide (also known as myrtrimonium bromide or Quaternium-13), stearyl dimethyl distearyldimonium chloride, dicetyl dimonium chloride, stearyl octyldimonium methosulfate, dihydrogenated palmoylethyl hydroxyethylmonium methosulfate, isostearyl benzylimidonium chloride, cocoyl benzyl hydroxyethyl imidazolinium chloride, dicetyl dimonium chloride and distearyldimonium chloride; isostearylaminopropalkonium chloride or olealkonium chloride; behentrimonium chloride; as well as mixtures thereof.

In another embodiment, the surfactant is an anionic surfactant. The anionic surfactant includes but is not limited to linear alkylbenzene sulfonates, alpha olefin sulfonates, paraffin sulfonates, alkyl ester sulfonates, alkyl sulfates, alkyl alkoxy sulfates, alkyl sulfonates, alkyl alkoxy carboxylates, alkyl alkoxylated sulfates, monoalkyl phosphates, dialkyl phosphates, sarcosinates, sulfosuccinates, isethionates, and taurates, as well as mixtures thereof. Commonly used anionic surfactants that are suitable as the anionic surfactant component of the composition of the use of the present invention include, for example, ammonium lauryl sulfate, ammonium laureth sulfate, triethylamine lauryl sulfate, triethylamine laureth sulfate, triethanolamine lauryl sulfate, triethanolamine laureth sulfate, monoethanolamine lauryl sulfate, monoethanolamine laureth sulfate, diethanolamine lauryl sulfate, diethanolamine laureth sulfate, lauric monoglyceride sodium sulfate, sodium lauryl sulfate, sodium laureth sulfate, potassium lauryl sulfate, potassium laureth sulfate, sodium-monoalkyl phosphates, sodium dialkyl phosphates, sodium lauroyl sarcosinate, lauroyl sarcosine, cocoyl sarcosine, ammonium cocyl sulfate, ammonium lauryl sulfate, sodium cocyl sulfate, sodium trideceth sulfate, sodium tridecyl sulfate, ammonium trideceth sulfate, ammonium tridecyl sulfate, sodium cocoyl isethionate, disodium laureth sulfosuccinate, sodium methyl oleoyl taurate, sodium laureth carboxylate, sodium trideceth carboxylate, sodium lauryl sulfate, potassium cocyl sulfate, potassium lauryl sulfate, monoethanolamine cocyl sulfate, sodium tridecyl benzene sulfonate, and sodium dodecyl benzene sulfonate. Branched anionic surfactants are particularly preferred, such as sodium trideceth sulfate, sodium tridecyl sulfate, ammonium trideceth sulfate, ammonium tridecyl sulfate, and sodium trideceth carboxylate.

Any amphoteric surfactant that is acceptable for use includes but is not limited to derivatives of aliphatic secondary and tertiary amines in which the aliphatic radical can be straight chain or branched and wherein one of the aliphatic substituents contains from 8 to 18 carbon atoms and one contains an anionic water solubilizing group. Specific examples of suitable amphoteric surfactants include the alkali metal, alkaline earth metal, ammonium or substituted ammonium salts of alkyl amphocarboxy glycinates and alkyl amphocarboxypropionates, alkyl amphodipropionates, alkyl amphodiacetates, alkyl amphoglycinates, and alkyl amphopropionates, as well as alkyl iminopropionates, alkyl iminodipropionates, and alkyl amphopropylsulfonates , such as for example, cocoamphoacetate cocoamphopropionate, cocoamphodiacetate, lauroamphoacetate, lauroamphodiacetate , lauroamphodipropionate, lauroamphodiacetate, cocoamphopropyl sulfonate caproamphodiacetate, caproamphoacetate, caproamphodipropionate, and stearoamphoacetate.

Suitable zwitterionic surfactants include alkyl betaines, such as cocodimethyl carboxymethyl betaine, lauryl dimethyl carboxymethyl betaine, lauryl dimethyl alpha-carboxyethyl betaine, cetyl dimethyl carboxymethyl betaine, lauryl bis-(2-hydroxy-ethyl)carboxy methyl betaine, stearyl bis-(2-hydroxy-propyl)carboxymethyl betaine, oleyl dimethyl gamma-carboxypropyl betaine, and lauryl bis-(2-hydroxypropyl)alpha-carboxyethyl betaine, amidopropyl betaines, and alkyl sultaines, such as cocodimethyl sulfopropyl betaine, stearyldimethyl sulfopropyl betaine, lauryl dimethyl sulfoethyl betaine, lauryl bis-(2-hydroxy-ethyl)sulfopropyl betaine, and alkylamidopropylhydroxy sultaines.

Typically nonionic surfactants are utilized, which include but are not limited to polyalkoxylated surfactants, for example chosen from alkoxylated alcohols, alkoxylated fatty alcohols, alkoxylated triglycerides, alkoxylated fatty acids, alkoxylated sorbitan esters, alkoxylated fatty amines, alkoxylated bis(1-phenylethyl)phenols, alkoxylated tris(1-phenylethyl)phenols and alkoxylated alkylphenols, in which the number of alkoxy and more particularly oxyethylene and/or oxypropylene units is such that the HLB value is greater than or equal to 10.

In one embodiment, the alcohol ethoxylates used in connection with the present invention have the formula:

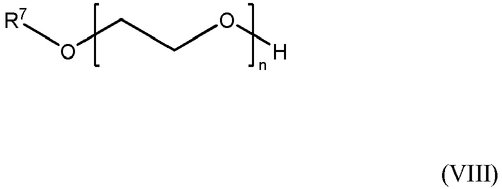

Typically, R⁷ is a hydrogen or a hydrocarbon chain containing 5 to 25 carbon atoms, more typically from 7 to 14 carbon atoms, most typically, from 8 to 13 carbon atoms, and may be branched or straight-chained and saturated or unsaturated and is selected from the group consisting of hydrogen, alkyl, alkoxy, aryl, alkaryl, alkylarylalkyl and arylalkyl. Typically, "n" is an integer from about 1 to about 30, more typically an integer from 2 to about 20, and most typically an integer from about 3 to about 12.

In an alternative embodiment, the alcohol ethoxylate is sold under the trade name Rhodasurf (manufactured by Rhodia Inc., Cranbury, NJ).

In yet another embodiment, surfactants used in the present invention are non-ionic surfactants including but not limited to: polyoxyalkylenated C₆-C₂₄ aliphatic alcohols comprising from 2 to 50 oxyalkylene (oxyethylene and/or oxypropylene) units, in particular of those with 12 (mean) carbon atoms or with 18 (mean) carbon atoms; mention may be made of Antarox B12DF, Antarox FM33, Antarox FM63 and Antarox V74, Rhodasurf ID 060, Rhodasurf ID 070 and Rhodasurf LA 42 from (Rhodia Inc., Cranbury, NJ), as well as polyoxyalkylenated C₈-C₂₂ aliphatic alcohols containing from 1 to 25 oxyalkylene (oxyethylene or oxypropylene) units.

In a further embodiment, the surfactant further comprises a terpene or a terpene alkoxylate. Terpene alkoxylates are terpene-based surfactants derived from a renewable raw materials such as α-pinene and β-pinene, and have a C-9 bicyclic alkyl hydrophobe and polyoxy alkylene units in an block distribution or intermixed in random or tapered distribution along the hydrophilic chain. The terpene alkoxylate surfactants are described in the U.S. Patent Application Publication No. 2006/0135683 to Adam al., June 22, 2006.

Typical terpene alkoxylates are Nopol alkoxylate surfactants and have the general formula:

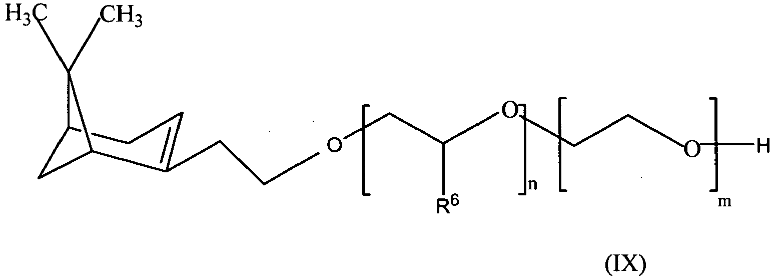

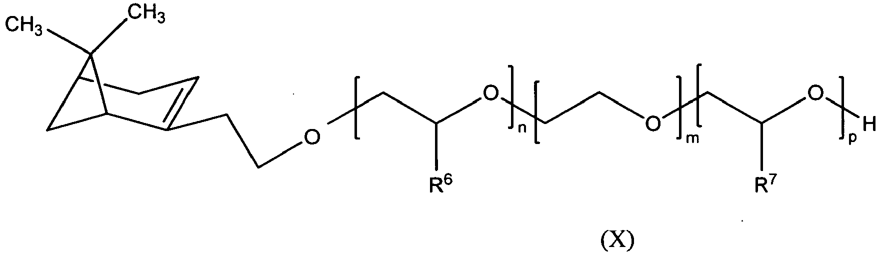

where R⁶ and R⁷ are, individually, hydrogen, CH₃, or C₂H₅; "n" is from about 1 to about 30; "m" is from about 0 to about 20; and "p" is from about 0 to 20. The "n", "m" and/or "p" units may be of block distribution or intermixed in random or tapered distribution along the chain.

In another embodiment, R⁶ is CH₃; "n" is from about 20 to about 25; "m" is from about 5 to about 10. In yet another embodiment, R⁶ and R⁷ are individually CH₃; "n" is from about 1 to about 8; "m" is from about 2 to about 14; and "p" is from about 10 to about 20. Mention can be made of Rhodoclean® HP (a terpene EO/PO)(manufactured by Rhodia Inc., Cranbury, NJ) and Rhodoclean® MSC (a terpene EO/PO)(manufactured by Rhodia Inc., Cranbury, NJ).

In one embodiment, the surfactants utilized in the composition of the use of the present invention are present in an amount of from 1% to 75% by weight of the composition. One or a combination of surfactants totaling this amount may be utilized. In another embodiment, the surfactants are present in an amount of from 10% to 60% by weight of the composition. In another embodiment, the surfactant is a combination of (i) an alcohol ethoxylate present from 1% to 60% by weight of the composition, typically from 35% to 55% by weight of the composition, and (ii) a terpene alkoxylate present from 0.1% to 20% by weight of the composition, typically from 2% to 15% by weight of the composition.

### Thickeners

The composition of the use of the present invention can comprise thickeners to aid application of the composition to the surface to be protected. The thickener is typically one or a combination of polyacrylates, polyacrylamides, silicates, magnesium silicates, polyvinyl alcohol, fumed silicas, guar gum, guar gum derivatives, cellulose, cellulose derivatives, hydroxypropyl methyl cellulose and hydroxymethylcellulose.

Other suitable thickeners can be utilized, including but not limited to fumed silica, silica gels, precipitated silica, guar gum, guar gum derivatives, clay, gums and any other thickeners will be useful along with preferable cellulosic thickeners, polyacrylates, magnesium silicates, polyvinyl alcohol. Still other thickeners which maybe used include dextrin and cornstarch.

In one embodiment, the thickeners utilized in the composition of the use of the present invention are in an amount of from 0.01% to 20% by weight of the composition. In another embodiment, the thickeners are present in an amount of from 0.5% to 1 % by weight of the composition.

### Other additives

In a further or alternative embodiment, the composition of the use of the present invention further comprises additional components or additives. These additional ingredients can be added to improve performance or appearance of the coatings such as wetting agents, solvents, defoamers, leveling agents, pigment paste, dyes etc. Other additional components include, but are not limited to, delaminates, buffering and/or pH control agents, fragrances, perfumes, dyes, whiteners, brighteners, solubilizing materials, stabilizers, corrosion inhibitors, lotions and/or mineral oils, enzymes, cloud point modifiers, preservatives, ion exchangers, chelating agents, sudsing control agents, soil removal agents, softening agents, opacifiers, inert diluents, graying inhibitors, stabilizers, polymers and the like.

### Applications

The composition of the use of the present invention is employed by applying in a convenient manner such as, for example, by brushing, rolling, spraying or the like. Typically, the composition will be contacted with or applied to the interior walls, windows, and floor surfaces in and around a paint spray booth. In some embodiments, the composition of the use of the present invention is allowed to set for about 1 to about 30 minutes in order to settle or form a film. During a spraying application, the object that is desired to be coated is placed in the spray booth. Spraying or application of coatings are typically performed on automotive parts, aerospace parts, appliance parts and/or parts in industries which require coatings or decorative finishes. Overspray collects on the composition (other wise referred to as a sacrificial coating) instead of the surface the coating protects and remains until the end of the coating application

In one embodiment, the coating composition of the use of the present invention remains on the surface for a short period of time (e.g., daily) and then is removed. Typically, the sacrificial coating is removed through washing. Washing is generally effected under pressure alone, although certain areas where paint has built-up heavily may require hand pressure with a towel or sponge and possibly use of a brush.

In other embodiments, the sacrificial coating may remain on the surface for an extended period of time. Typically, during a paint spray application, the sacrificial coating will remain on the surfaces for about 30 minutes to about 48 hours, which is more than adequate for all the work to be completed. Depending on its use, however, the composition may be allowed to remain on the surface for a longer period of time, for example, longer than 72 hours.

In another embodiment, the composition of the use of the present invention may also be used to prevent the deposition of contamination in general from directly depositing on the surface on which the sacrificial coating is applied. Contaminants can include but are not limited to grease, rain, snow, dirt, oil, air pollutants, soot, vehicle exhaust, and the like.

### Experiments

Results are as follows:

| **Material** | **R0729-45-2 (DV-9280)** |
|---|---|
| Rhodiasolv Iris | 40.47 |
| Rhodasurf DA-630 | 47.95 |
| Methocel 311 | 0.705 |
| Rhodoclean MSC | 10.86 |
| Total | 99.98 |

### Substrate: Bonderite B 1000

A panel of the above-referenced substrate (Bonderite B 100) is coated with 4×10⁻³ L (4 wet mils) of DV-9280. Water-based paint (light green) and Oil-based paint (dark brown) is then applied on the panel. The panel is then rinsed with water using a squeeze bottle. Results: Rank 5 - water and oil based paints were completely rinsed from the panel. The substrate was left without any paint marks.

### Substrate: Cold rolled steel

A panel of the cold rolled steel substrate is coated with 4×10⁻³ L (4 wet mils) of DV-9280. Water-based paint (light green) and Oil-based paint (dark brown) is then applied on the panel. The panel is then rinsed with water using a squeeze bottle. Results: Rank 5 - water and oil based paints were completely rinsed. The substrate was left without any paint marks.

### Substrate: Aluminum

A panel of the above-referenced substrate (aluminum) is coated with 4×10⁻³ L (4 wet mils) of DV-9280. Water based paint (light green) and Oil based paint (dark brown) is then applied on the panel. The panel is then rinsed with water using a squeeze bottle. Results: Rank 4 - The paint marks were rinsed and cleared. The water-based paint was completely removed. The oil-based paint had some marks left on the substrate. Wiping with paper towel, substrate was completely cleaned.

| **Ranking** | **Performance** |
|---|---|
| 5 | No color or marking |
| 4 | Slight color or marking |
| 3 | Colored marking |
| 2 | Significant colored marking |
| 1 | No change from initial colored marking |

## Claims

1. Use of a composition for preventing the deposit of overspray, the composition comprising, based on the total weight of the composition,:
(a) from 1% to 60% by weight a blend of dibasic esters;
(b) from 10% to 75% by weight one or more surfactants; and
(c) a thickener.

2. Use of the composition in claim 1 wherein the blend of dibasic esters comprises (i) a dialkyl methylglutarate and (ii) at least one of a dialkyl adipate or a dialkyl ethylsuccinate.

3. Use of the composition of claim 1 wherein the blend of dibasic esters is derived from one or more by-products in the production of polyamide.

4. Use of the composition of claim 2 wherein the blend of dibasic esters is derived from the process to produce adiponitrile.

5. Use of the composition of claim 1 wherein a blend of dibasic esters has a general formula: 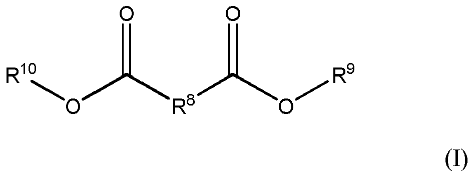 wherein R⁹ and R¹⁰ independently comprise a hydrocarbon chain containing 1 to 10 carbon atoms, and wherein R⁸ is a mixture of at least two of -CH₂-CH₂-CH₂₋-CH₂-, -CH(CH₃)-CH₂-CH₂-, and -CH(C₂H₅)-CH₂-.

6. Use of the composition of claim 1 wherein the one or more surfactants are selected from the group consisting of an alcohol alkoxylate, an alcohol ethoxylate, an alkyl phenol alkoxylate, an alkyl phenol ethoxylate, a terpene alkoxylate, a terpene and any combination thereof.

7. Use of the composition of claim 1 wherein the thickener is selected from the group consisting of polyacrylates, polyacrylamides, silicates, magnesium silicates, polyvinyl alcohol, fumed silicas, guar gum, guar gum derivatives, cellulose, cellulose derivatives, hydroxylpropsyl methyl cellulose, hydroxymethylcellulose and any combination thereof.

8. Use of the composition of claim 1 wherein the one ore more surfactants comprise (a) an alcohol ethoxylate and (b) a terpene.

9. Use of the composition of claim 1 wherein the blend of dibasic esters comprises:
(i) 7-14%, by weight of the blend, a dibasic ester of formula: 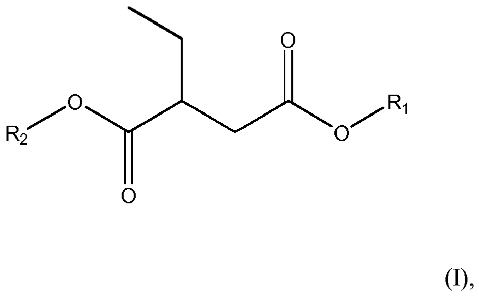
(ii) 80-94%, by weight of the blend, a dibasic ester of formula 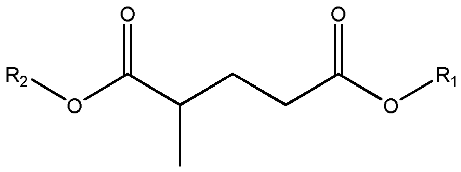 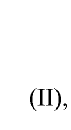 and
(iii) 0-10%,by weight of the blend, a dibasic ester of formula 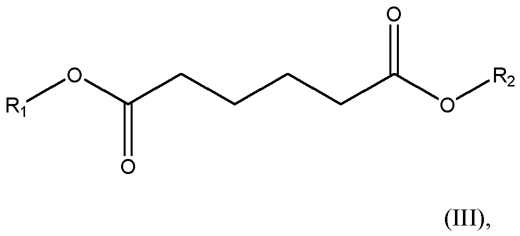 wherein R₁ and R₂ individually comprise a C₁-C₁₀ hydrocarbon group.

10. A method for protecting a surface in a coating application comprising the steps of:
a) contacting a composition to a surface that is desired not be in contact with a coating application coating, the composition comprising, based on the total weight of the composition,:
(i) from 1% to 60% by weight a blend of dibasic esters;
(ii) from 10% to 75% by weight one or more surfactants; and
(iii) a thickener; and
b) removing the composition from the surface after the coating application.

11. The method of claim 10 wherein step b) further comprises rinsing the composition from the surface with water.

12. The method of claim 10, wherein the composition is the composition of any one of claims 2 to 9.

13. The method of claim 10 wherein the coating application is a spray booth application.

14. The method of claim 10, for protecting a surface during a spray booth operation comprising the steps of:
a) contacting a composition with a surface that is desired not be contaminated during the spray booth operation, the composition comprising, based on the total weight of the composition:
(i) from 1% to 60% by weight a blend of dibasic esters, wherein the blend of dibasic esters comprises:
(A) 7-14%, by weight of the blend, a dibasic ester of formula: 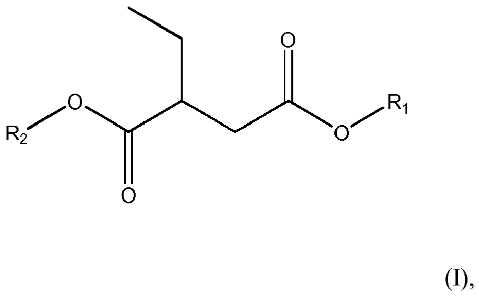
(B) 80-94%, by weight of the blend, a dibasic ester of formula 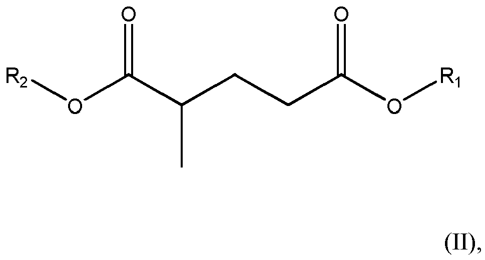 and
(C) 0-10%,by weight of the blend, a dibasic ester of formula 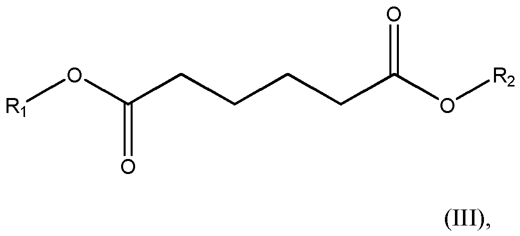 wherein R₁ and R₂ individually comprise a C₁-C₁₀ hydrocarbon group;
(ii) from 2% to 60% by weight an alcohol ethoxylate;
(iii) from 1% to 50% by weight a terpene;
wherein the combined amount of alcohol ethoxylate and terpene is from 10% to 75% by weight; and
(iv) a thickener;
b) allowing the composition to be exposed to paint during the spray booth operation; and
c) rinsing the composition from the surface with an aqueous solution after the spray booth operation.

## Patentansprüche

1. Verwendung einer Zusammensetzung zum Verhindern der Ablagerung von Overspray, wobei die Zusammensetzung, basierend auf dem Gesamtgewicht der Zusammensetzung, Folgendes umfasst:
(a) von 1 Gew.-% bis 60 Gew.-% eine Mischung aus dibasischen Estern;
(b) von 10 Gew.-% bis 75 Gew.-% ein oder mehrere Tenside; und
(c) ein Verdickungsmittel.

2. Verwendung der Zusammensetzung nach Anspruch 1, wobei die Mischung aus dibasischen Estern (i) ein Dialkyl-Methylglutarat und (ii) mindestens eines von einem Dialkyl-Adipat oder einem Dialkyl-Ethylsuccinat umfasst.

3. Verwendung der Zusammensetzung nach Anspruch 1, wobei die Mischung aus dibasischen Estern aus einem oder mehreren Nebenprodukten bei der Herstellung von Polyamid abgeleitet ist.

4. Verwendung der Zusammensetzung nach Anspruch 2, wobei die Mischung aus dibasischen Estern aus dem Verfahren zur Herstellung von Adiponitril abgeleitet ist.

5. Verwendung der Zusammensetzung nach Anspruch 1, wobei eine Mischung aus dibasischen Estern eine allgemeine Formel hat: 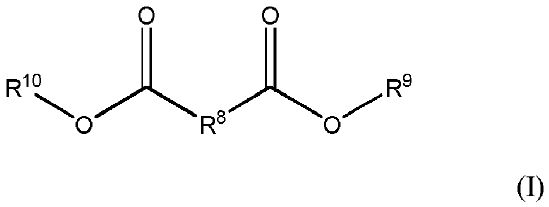 wobei R⁹ und R¹⁰ unabhängig eine Kohlenwasserstoffkette umfassen, die 1 bis 10 Kohlenstoffatome enthält, und wobei R⁸ eine Mischung aus mindestens zwei von -CH₂-CH₂-CH₂₋-CH2-, -CH(CH₃)-CH₂-CH₂-, und -CH(C₂H₅)-CH₂- ist.

6. Verwendung der Zusammensetzung nach Anspruch 1, wobei das eine oder die mehreren Tenside aus der Gruppe gewählt werden, die aus einem Alkoholalkoxylat, einem Alkoholethoxylat, einem Alkylphenolalkoxylat, einem Alkylphenolethoxylat, einem Terpenalkoxylat, einem Terpen und Kombinationen daraus besteht.

7. Verwendung der Zusammensetzung nach Anspruch 1, wobei das Verdickungsmittel aus der Gruppe gewählt wird, die aus Polyacrylaten, Polyacrylamiden, Silikaten, Magnesiumsilikaten, Polyvinylalkohol, pyrogenen Kieselsäuren, Guarkernmehl, Guarkernmehlderivaten, Cellulose, Cellulosederivaten, Hydroxypropylmethylcellulose, Hydroxymethylcellulose und Kombinationen daraus besteht.

8. Verwendung der Zusammensetzung nach Anspruch 1, wobei das eine oder die mehreren Tenside (a) ein Alkoholethoxylat und (b) ein Terpen umfassen.

9. Verwendung der Zusammensetzung nach Anspruch 1, wobei die Mischung aus dibasischen Estern Folgendes umfasst:
(i) 7-14 Gew.-% der Mischung, einen dibasischen Ester der Formel: 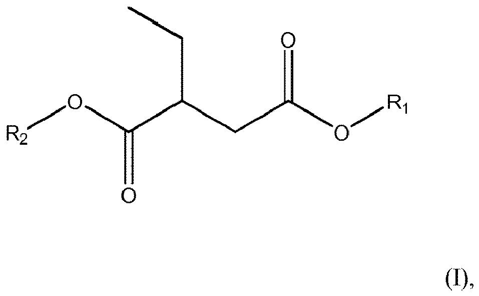
(ii) 80-94 Gew.-% der Mischung, einen dibasischen Ester der Formel 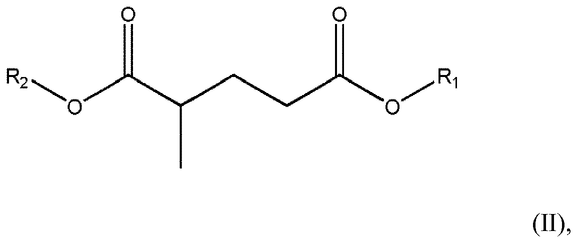 und
(iii) 0-10 Gew.-% der Mischung, einen dibasischen Ester der Formel 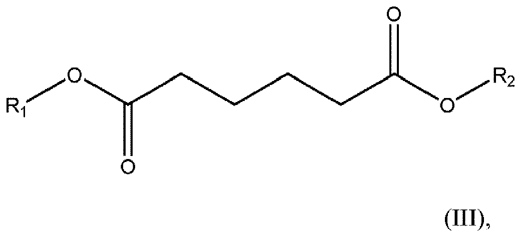 wobei R₁ und R₂ individuell eine C₁-C₁₀-Kohlenwasserstoffgruppe umfassen.

10. Verfahren zum Schutz einer Oberfläche in einer Beschichtungsanwendung, das die folgenden Schritte umfasst:
(a) Kontaktieren einer Zusammensetzung mit einer Oberfläche, die keinen Kontakt mit einer Beschichtung einer Beschichtungsanwendung haben soll, wobei die Zusammensetzung, basierend auf dem Gesamtgewicht der Zusammensetzung, Folgendes umfasst:
(i) von 1 Gew.-% bis 60 Gew.-% eine Mischung aus dibasischen Estern;
(ii) von 10 Gew.-% bis 75 Gew.-% ein oder mehrere Tenside; und
(iii) ein Verdickungsmittel; und
b) Entfernen der Zusammensetzung von der Oberfläche nach der Beschichtungsanwendung.

11. Verfahren nach Anspruch 10, wobei Schritt b) weiter das Spülen der Zusammensetzung von der Oberfläche mit Wasser umfasst.

12. Verfahren nach Anspruch 10, wobei die Zusammensetzung die Zusammensetzung nach einem der Ansprüche 2 bis 9 ist.

13. Verfahren nach Anspruch 10, wobei die Beschichtungsanwendung eine Spritzkabinenanwendung ist.

14. Verfahren nach Anspruch 10, zum Schutz einer Oberfläche während einer Spritzkabinentätigkeit, das die folgenden Schritte umfasst:
a) Kontaktieren einer Zusammensetzung mit einer Oberfläche, die während der Spritzkabinentätigkeit nicht kontaminiert werden soll, wobei die Zusammensetzung, basierend auf dem Gesamtgewicht der Zusammensetzung, Folgendes umfasst:
(i) von 1 Gew.-% bis 60 Gew.-% eine Mischung aus dibasischen Estern, wobei die Mischung aus dibasischen Estern Folgendes umfasst:
(A) 7-14 Gew.-% der Mischung, einen dibasischen Ester der Formel: 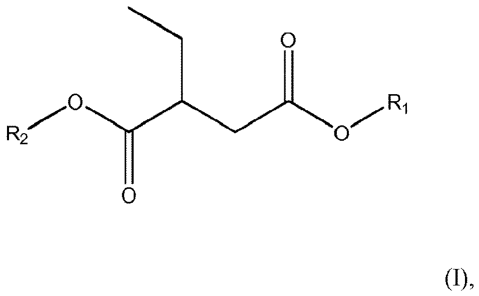
(B) 80-94 Gew.-% der Mischung, einen dibasischen Ester der Formel 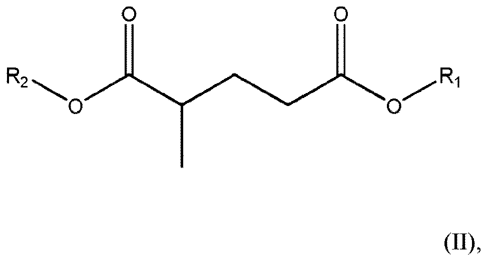 and und (C) 0-10 Gew.-% der Mischung, einen dibasischen Ester der Formel 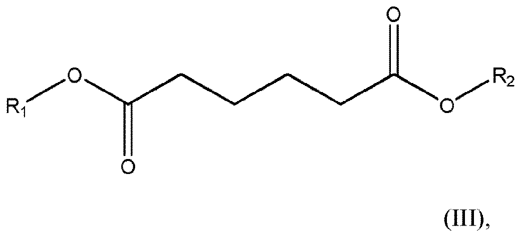 wobei R₁ und R₂ individuell eine C₁-C₁₀-Kohlenwasserstoffgruppe umfassen;
(ii) von 2 Gew.-% bis 60 Gew.-% ein Alkoholethoxylat;
(iii) von 1 Gew.-% bis 50 Gew.-% ein Terpen;
wobei die kombinierte Menge an Alkoholethoxylat und Terpen von 10 Gew.-% bis 75 Gew.-% reicht; und
(iv) ein Verdickungsmittel;
b) Ermöglichen der Zusammensetzung, während der Spritzkabinentätigkeit Farbe ausgesetzt zu sein; und
c) Spülen der Zusammensetzung von der Oberfläche mit einer wässrigen Lösung nach der Spritzkabinentätigkeit.

## Revendications

1. Utilisation d'une composition pour empêcher le dépôt de surpulvérisation, la composition comprenant, sur la base de la quantité totale de la composition.
(a) de 1 % à 60% en poids d'un mélange d'esters dibasiques;
(b) de 10% à 75% en poids d'un ou plusieurs tensioactifs; et
(c) un épaississant.

2. Utilisation de la composition selon la revendication 1, où le mélange d'esters dibasiques comprend (i) un méthylglutarate de dialkyle et (ii) au moins l'un d'un adipate de dialkyle ou un éthylsuccinate de dialkyle.

3. Utilisation de la composition selon la revendication 1, où le mélange d'esters dibasiques est dérivé d'un ou plusieurs sous-produits dans la production de polyamide.

4. Utilisation de la composition selon la revendication 2, où le mélange d'esters dibasiques est dérivé du processus pour produire de l'adiponitrile.

5. Utilisation de la composition selon la revendication 1, où un mélange d'esters dibasiques a une formule générale : 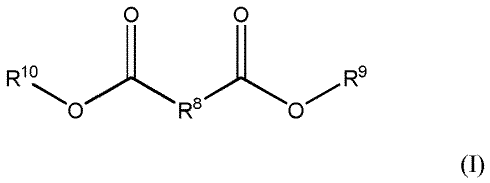 où R⁹ et R¹⁰ comprennent indépendamment une chaîne hydrocarbonée contenant 1 à 10 atomes de carbone, et où R⁸ est un mélange d'au moins deux éléments parmi -CH₂-CH₂-CH₂-CH₂-, -CH(CH₃)-CH₂-CH₂- et -CH(C₂H₅)-CH₂-.

6. Utilisation de la composition selon la revendication 1, où lesdits un ou plusieurs agents tensioactifs sont choisis dans le groupe constitué d'un alcoxylate d'alcool, d'un éthoxylate d'alcool, d'un alcoxylate d'alkyle phénol, d'un phénol éthoxylate d'alkyle, d'un alcoxylate de terpène, d'un terpène et d'une combinaison quelconque de ceux-ci.

7. Utilisation de la composition selon la revendication 1, où l'épaississant est choisi dans le groupe constitué par les polyacrylates, les polyacrylamides, les silicates, les silicates de magnésium, l'alcool polyvinylique, les silices fumées, la gomme de guar, les dérivés de gomme de guar, la cellulose, les dérivés de cellulose, la cellulose de méthyle hydroxylpropsylique, la cellulose hydroxyméthylique et toute combinaison de ceux-ci.

8. Utilisation de la composition selon la revendication 1, où lesdits un ou plusieurs agents tensioactifs comprennent (a) un éthoxylate d'alcool et (b) un terpène.

9. Utilisation de la composition selon la revendication 1, où le mélange d'esters dibasiques comprend :
(i) 7-14%, en poids du mélange, d'un ester dibasique de formule: 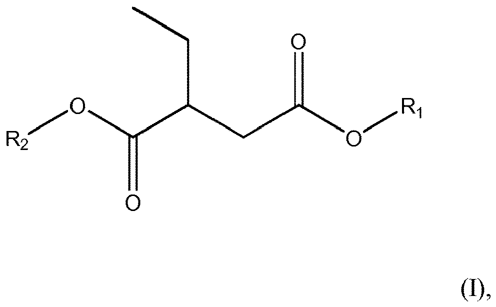
(ii) 80-94%, en poids du mélange, d'un ester dibasique de formule : 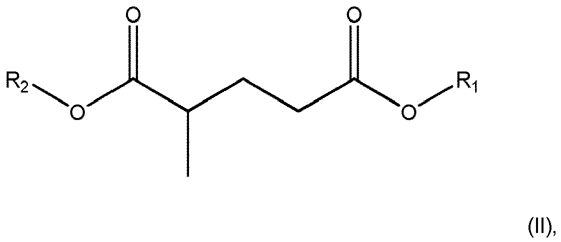 et
(iii comprend) 0-10%, en poids du mélange, d'un ester dibasique de formule 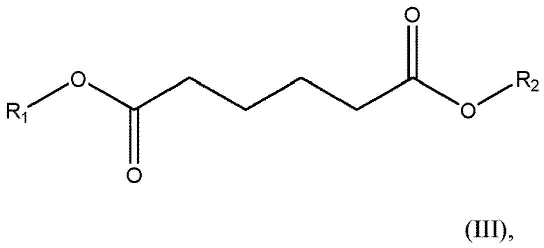 où R₁ et R₂ représentent individuellement un groupe hydrocarboné en C₁-C₁₀.

10. Procédé de protection d'une surface dans une application de revêtement, comprenant les étapes :
a) de mise en contact d'une composition sur une surface que l'on souhaite ne pas être en contact avec un revêtement d'application de revêtement, ladite composition comprenant, par rapport au poids total de la composition :
(i) de 1 % à 60% en poids d'un mélange d'esters dibasiques ;
(ii) de 10% à 75% en poids d'un ou plusieurs tensioactifs ; et
(iii) un épaississant; et
b) d'élimination la composition de la surface après l'application du revêtement.

11. Procédé selon la revendication 10, où la phase b) comprend en outre le rinçage à l'eau de la composition à partir de la surface.

12. Procédé selon la revendication 10, où la composition est la composition selon l'une quelconque des revendications 2 à 9.

13. Procédé selon la revendication 10, où l'application de revêtement est une application de cabine de pulvérisation.

14. Procédé selon la revendication 10, permettant de protéger une surface pendant une opération de cabine de pulvérisation, comprenant les étapes :
a) de mise en contact d'une composition avec une surface que l'on souhaite ne pas être contaminée pendant l'opération de cabine de pulvérisation, la composition comprenant, par rapport au poids total de la composition :
(i) de 1 % à 60% en poids d'un mélange d'esters dibasiques, où le mélange d'esters dibasiques comprend:
(A) 7-14%, en poids du mélange, d'un ester dibasique de formule : 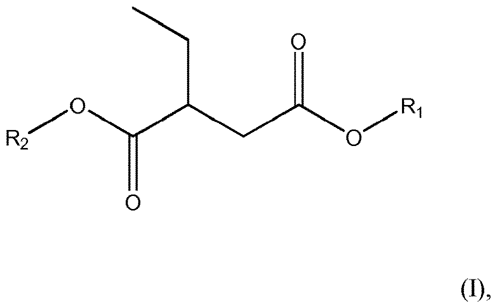
(B) 80-94%, en poids du mélange, d'un ester dibasique de formule: 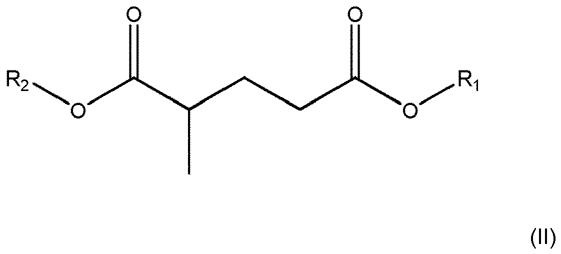 et
(C) 0-10%, en poids du mélange, d'un ester dibasique de formule: 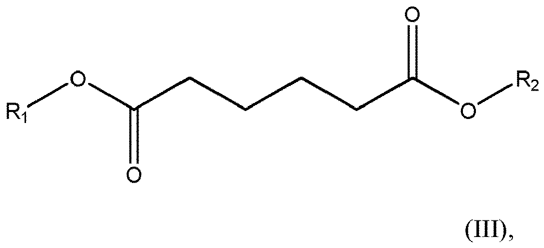 où R₁ et R₂ représentent individuellement un groupe hydrocarboné en C₁-C₁₀;
(ii) de 2% à 60% en poids d'un éthoxylate d'alcool ;
(iii) de 1% à 50% en poids d'un terpène ;
où la quantité combinée de l'éthoxylate d'alcool et de terpène est de 10% à 75% en poids; et (iv) un épaississant;
b) permettre à la composition d'être exposée à la peinture pendant l'opération de cabine de pulvérisation ;
c) et le rinçage de la composition à partir de la surface avec une solution aqueuse après l'opération de cabine de pulvérisation.
